# EUROPÄISCHE PATENTANMELDUNG

(11) **EP 3 839 455 A1**
(43) Veröffentlichungstag der Anmeldung: **23.06.2021**
(21) Anmeldenummer: 20200849.6
(22) Anmeldetag: 24.11.2011
(51) Int. Cl.: G01J 3/42, G01N 21/27, G01N 21/31

(54) **VORRICHTUNG ZUR HOCHAUFGELÖSTEN BESTIMMUNG DER KONZENTRATION VON SUBSTANZEN IN FLUIDEN MEDIEN**

(30) Priorität: 19.10.2011 DE 102011116367
(62) Teilanmeldung aus: 11190468.6
(71) Anmelder: Bluepoint Medical GmbH & Co. KG, 23923 Selmsdorf (DE)
(72) Erfinder: Degner, Martin, 18209 Reddelich (DE); Ewald, Hartmut, 18055 Rostock (DE); Damaschke, Nils, 18059 Papendorf (DE)
(74) Vertreter: Seemann & Partner Patentanwälte mbB

(57) **Zusammenfassung**

Vorrichtung zur Bestimmung der Konzentration einer oder mehrerer Substanzen in einem fluiden Medium, wobei die Lichtemission einer Multiquantumwell-Leuchtdiode (MQW-LED) zur Absorptionsmessung genutzt wird. Das emittierte Licht interagiert in einer Messanordnung mit der zu bestimmenden Substanz und wirkt in einer Detektoreinheit mittels eines optischen Filters auf einen Absorptions- und einen Referenzdetektor, die ein Messsignal und ein Referenzsignal generieren. Aus dem Vergleich dieser Signale wird die Konzentration der zu bestimmenden Substanz ermittelt.

## Beschreibung

Die vorliegende Erfindung betrifft eine Vorrichtung zur Bestimmung der Konzentration von Substanzen in fluiden Medien.

Das hier zugrunde liegende Verfahren der optischen Absorptionsspektroskopie ist allgemein bekannt und wird in verschiedenen Anordnungen auch zur Bestimmung der Konzentration von Substanzen genutzt. Als Lichtquelle für derartige Anordnungen dienen u. a. breitbandige Lichtquellen, wie thermische Strahler und verschiedenartige Gasentladungslampen
(EP 0 656 535 A1), sowie schmalbandige Laser-Lichtquellen (Lambrecht, A. und J. Koeth, Quantenkaskadenlaser - eine neue Laserlichtquelle für die optische Analysenmesstechnik. Technisches Messen, 2005). Neuerdings werden für Substanzen mit vorwiegend vergleichsweise breitbandigen Absorptionscharakteristiken auch LEDs als spektral selektive Lichtquellen eingesetzt (DE 10 2008 064 173 A1). Jedoch weisen viele Substanzen eine gegenüber der spektralen Bandbreite der LED-Lichtquelle vergleichsweise schmalbandige Absorptionscharakteristik auf, wie beispielsweise gelöstes Benzol (im Folgenden generell als "schmalbandig" und der entgegen gesetzte Fall als "breitbandig" bezeichnet).

In der Absorptionsmesstechnik ist für eine hohe Messgenauigkeit zur Bestimmung der Konzentration von Substanzen in fluiden Medien eine hohe Rohsignalauflösung und Rohsignalstabilität erforderlich, welche aufgrund der Emissionsstabilität herkömmlicher, in der Spektroskopie verwendeter Lichtquellen nicht direkt erreichbar ist. Unter Emissionsstabilität versteht man dabei ein über die Messzeit stabiles Emissionsspektum hinsichtlich der gewählten Messwellenlängen sowie über die Messzeit stabile Amplituden dieser Wellenlängen.

Die Ermittlung der Konzentration von Substanzen basiert auf einer Messung der Schwächung des Lichtes, bedingt durch die Lichtabsorption der Substanz bei einer bestimmten Konzentration. Herkömmlicher Weise werden hierzu Vorkehrungen getroffen, die Emissionseigenschaften der Lichtquelle zu referenzieren, um so quellenbedingte Störeinflüsse hinsichtlich Emissionsstabilität im Messsignal zu kompensieren. In herkömmlichen Anordnungen wird zu diesem Zweck das Licht beispielsweise zwischen Quelle und optischer Messstrecke aufgeteilt und zum Teil auf einen Referenzdetektor gelenkt. Somit sind neben dem erhöhten technischen Aufwand für die optische Strahlführung auch zwei exakt gleich arbeitende Empfangseinheiten notwendig. Resultierende Messanordnungen sind daher häufig sehr komplex und mechanisch aufwendig aufgebaut und daher auch kostenintensiv. Dies gilt insbesondere zum Beispiel für Anordnungen auf Basis von Breitbandlichtquellen und den hier häufig verwendeten Empfangseinheiten auf Basis eines Spektrometers.

Eine weitere Lösung herkömmlicher Systeme basiert auf mechanischen Umschaltern im optischen Strahlengang. Damit ist es möglich, mit nur einer Detektoreinheit eine Referenzierung des zur Messung genutzten Lichtes zu realisieren. In diesem Fall werden jedoch hohe Anforderungen an die Reproduzierbarkeit des Umschaltvorganges gestellt, um Amplituden- und spektrale Stabilität zu gewährleisten. Eine kontinuierliche Bestimmung der Konzentration von Substanzen mit hoher Auflösung ist aufgrund des Zeitbedarfs der Referenzierung hier nicht möglich.

Veränderungen in der Transmission des Absorptions- oder des Referenzmesspfades sowie Veränderungen, beispielsweise Alterung, der Detektoreinheite(n) wirken sich direkt auf die Messgenauigkeit aus. Dies erfordert eine regelmäßige zyklische Rekalibrierung des Gesamtsystems.

Eine weitere prinzipielle Möglichkeit zur Realisierung einer hohen Messgenauigkeit bei Absorptionsmessungen besteht darin, die wellenlängenspezifische Absorption der Substanz zu nutzen, um so Amplitudenschwankungen der Quelle, des optischen Pfades und der Detektoren zu kompensieren. Dies erfordert jedoch eine hohe spektrale Auflösung des Messsystems und somit einen hohen gerätetechnischen Aufwand und damit verbundene hohe Kosten, wie zum Beispiel die Verwendung sehr hoch auflösender Spektrometer, mit einer spektralen Auflösung von typisch 0,01 nm und weniger.

Die Verwendung schmalbandiger Laserlichtquellen für die Laserabsorptionsspektroskopie ist neben den bisher beschriebenen Anordnungen auf Basis von Breitbandlichtquellen ein weiteres häufig genutztes Verfahren zur Konzentrationsbestimmung von Substanzen in fluiden Medien. Ein Ausführungsbeispiel hierzu ist die TDLAS (tunable laser absorption spectroscopy). Bei Anordnungen entsprechend dieses Verfahrens wird die Emissionswellenlänge einer geeigneten Laserlichtquelle spektral beispielsweise mit Hilfe des Stromes die Temperatur moduliert. Auf diese Weise wird ein Absorptionspeak der zu messenden Substanz bei verschiedenen Wellenlängen abgetastet. Durch den Vergleich mit bekannten Spektren, können Störungen weitgehend unterdrückt und die Konzentration von Substanzen bestimmt werden.

Mit Hilfe dieses Verfahrens werden hoch aufgelöste Konzentrationsmessungen realisiert. Ein wesentlicher Nachteil dieser Messtechnik ist in der Verfügbarkeit kostengünstiger Laserlichtquellen für bestimmte Wellenlängen zu sehen. Somit steht dieses Verfahren nur für ausgewählte Substanzen zur Verfügung und ist wie zum Beispiel bei Verwendung von Quanten-Kaskaden-Lasern extrem teuer. Diese Messmethode ist zusätzlich aufgrund der zeitlich abhängigen Wellenlängenmodulation der Quelle in der Messrate beschränkt und es findet keine kontinuierliche Konzentrationsbestimmung statt.

Aus dem Stand der Technik zur hoch aufgelösten Konzentrationsbestimmung von Substanzen mit vorwiegend schmalbandigen Absorptionscharakteristiken (beispielsweise Benzol, Toluol) ergeben sich zusammenfassend folgende Nachteile: Herkömmliche Breitbandlichtquellen müssen sowohl bzgl. der gesamten Emissionsintensität als auch bzgl. der spektralen Verteilung der Emissionsintensität referenziert werden. In Frage kommende Referenzierungsmöglichkeiten erfordern einen gewissen Anteil Licht und/oder Messzeit und reduzieren folglich das Signal Rauschverhältnis des Messsignals und/oder die zeitliche Auflösung des Messsignals (Messrate). Jede Referenzierung ist grundsätzlich mit einem nicht unerheblichen Aufwand und damit einhergehenden Kosten verbunden und erhöht zum Beispiel die Komplexität des Gesamtsystems und entsprechend auch die Störanfälligkeit des Systems.

Generell sind Vorrichtungen auf Basis von Breitbandlichtquellen oder Lasern im Vergleich zu LED-basierten Anordnungen in der Regel deutlich kostenintensiver, weniger mechanisch robust, störanfälliger und weisen eine vergleichsweise große Bauform sowie einen höheren Energiebedarf auf. Auch die elektronische Ansteuerung von LED-basierten Messsystemen ist wesentlich weniger aufwendig.

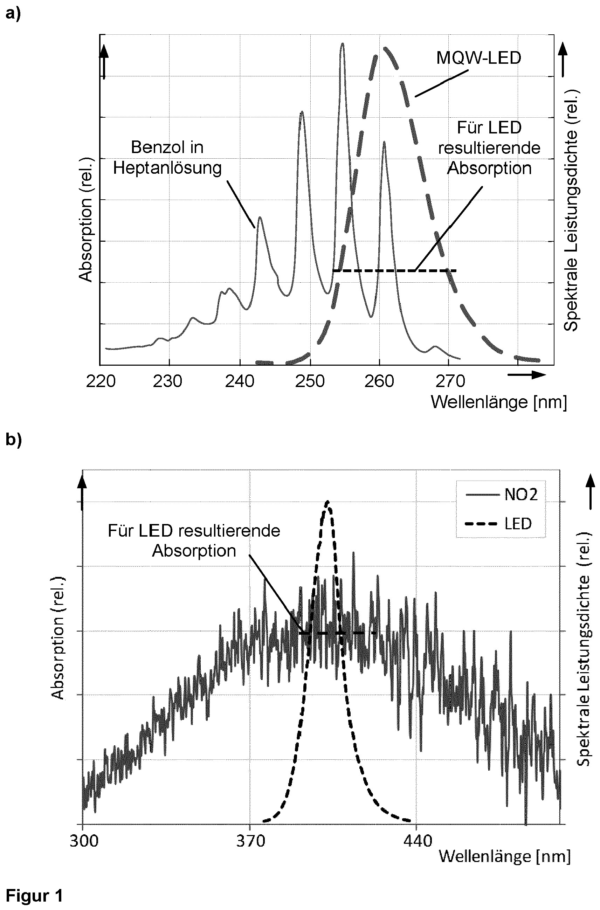

Die bekannte LED-basierte Absorptionsspektroskopie (DE 10 2008 064 173 A1) ist insbesondere für Substanze mit sehr schmalbandigen Absorptionscharakteristiken aufgrund des resultierenden geringen Absorptionsquerschnitts für eine hohe Messgenauigkeit jedoch nur wenig geeignet. Der resultierende Absorptionsquerschnitt einer Messanordnung, bestehend aus Emissionscharakteristik der LED und Absorptionseigenschaft der zu bestimmenden Substanz, ergibt sich aus der Schwächung des Transmissionssignals im Aufbau. Hierzu zeigt Figur 1 eine Gegenüberstellung des für eine LED-Absorptionsanordnung resultierenden Absorptionsquerschnitts für Benzol bzw. NO₂. Figur 1a zeigt das Beispiel einer schmalbandigen Absorptionscharakteristik von Benzol. Die resultierende Absorption ist deutlich geringer als die Peakabsorption. Figur 1b zeigt das Beispiel einer breitbandigen Absorptionscharakteristik von NO₂. Die resultierende Absorption ist ähnlich der Peakabsorption.

Zusätzlich erfordert die benötigte Referenzierung einen nicht zu vernachlässigenden Anteil der emittierten Lichtleistung. Insbesondere bei Messaufgaben im mittleren Infrarot oder im UV ist die Lichtausbeute der LED-Quellen im Allgemeinen nicht sehr hoch und die für die Messung zur Verfügung stehende Lichtleistung hat einen entscheidenden Einfluss auf die resultierende Messgenauigkeit und Auflösung des Messsignals.

Es besteht somit weiterhin das Problem, verschiedene Substanzen in fluiden Medien störungsfrei, mit hoher Messsignalauflösung und in einem einfach zu realisierenden robusten Aufbau zu detektieren und quantitativ zu bestimmen. Dieses Problem wird durch die Vorrichtung gemäß Anspruch 1 gelöst.

Die erfindungsgemäße Vorrichtung ist vorwiegend für Substanzen mit einer gegenüber der spektralen Bandbreite der LED-Lichtquelle vergleichsweise schmalbandigen Absorptionscharakteristik (beispielsweise gelöstes Benzol) geeignet.

Der Einsatz von Multiquantumwell (MQW)-LEDs als Lichtquelle für die hoch auflösende und stabile optische Spektroskopie schien zunächst nicht geeignet, da MQW-LEDs nicht stabile Lichtquellen hinsichtlich ihrer Emissionsintensität sind. Die Lichtemission ist beispielsweise stark von der Temperatur abhängig.

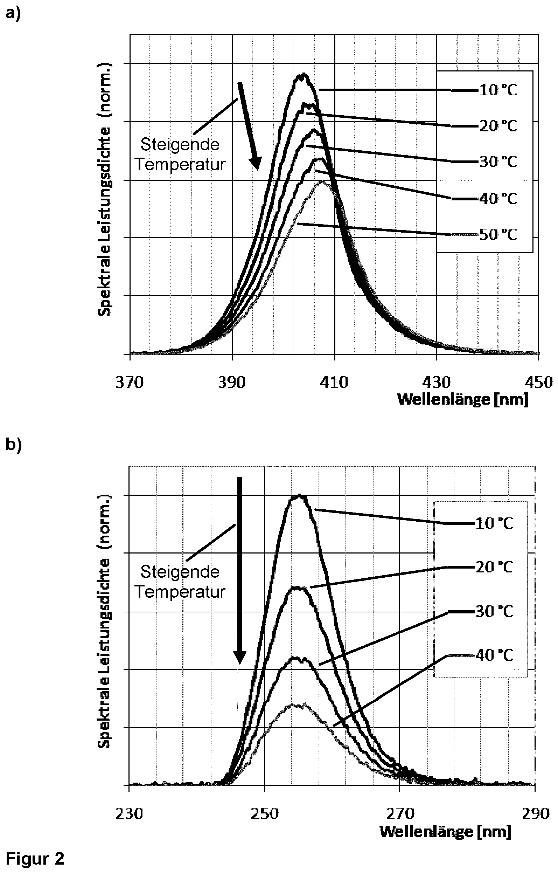

Es wurde nun gefunden, dass die hohe spektrale Emissionsstabilität von MQW-LEDs zur Überwindung dieses Nachteils genutzt werden kann. Unter spektraler Emissionsstabilität versteht man dabei ein über die Messzeit und einen weiten Temperaturbereich stabiles Emissionsspektum hinsichtlich der gewählten Messwellenlängen. Dieser Effekt wird an Hand von Figur 2 erläutert. Hierin zeigt Figur 2a die spektrale Leistungsdichteverteilung in Abhängigkeit von der Temperatur einer Standard-LED. Man erkennt, dass das Emissionsspektrum spektral nicht stabil ist. Demgegenüber ist das Emissionsspektrum einer MQW-LED, wie in Figur 2b gezeigt, über einen weiten Temperaturbereich spektral stabil.

Es treten unter normalen Betriebsbedingungen Amplitudenschwankungen im Prozentbereich auf. Für hoch aufgelöste Konzentrationsmessungen wird jedoch typischer Weise eine Stabilität der Quelle hinsichtlich der Amplituden der Messwellenlängen von weniger als 10 ppm erforderlich.

Durch die in Anspruch 1 beschriebene Vorrichtung wird die sehr hohe spektrale Stabilität der MQW-LEDs im Zusammenspiel mit zumindest einem optischen Filter für die Amplitudenreferenzierung genutzt. Hierbei wird das LED-Emissionsspektrum in mindestens zwei Anteile aufgeteilt, wobei der eine Anteil für die Absorptionsmessung der zu bestimmenden Substanz genutzt wird und der zweite Anteil zur Referenzierung der Amplitudenschwankungen der Emissionsintensität verwendet wird. Störungen des Transmissionssignals im Gesamtsystem werden hierdurch ebenfalls weitestgehend eliminiert.

Mit dieser vergleichsweise einfachen Vorrichtung und deren kostengünstigen Komponenten ist es so möglich, hoch aufgelöste Konzentrationsmessungen von Substanzen zu realisieren, welche sonst nur mit sehr hohem technischem Aufwand möglich sind.

Gegenüber herkömmlichen Messsystemen zur Konzentrationsbestimmung von Substanzen in fluiden Medien ergeben sich mit der erfindungsgemäßen Vorrichtung u.a. folgende Vorteile:
- Die Referenzierung und Kompensation von Amplitudenschwankungen der Lichtquelle erfolgt nahezu ohne Einschränkung der für die Absorptionsmessung zur Verfügung stehenden Lichtleistung (Emissionsintensität), daraus resultiert ein günstiges Signal-Rausch-Verhältnis (SNR) bzw. eine hohe Auflösung des Messsignals.
- Veränderungen des Messsignals bedingt durch beispielsweise Alterung der Detektoreinheit und oder der optischen Komponenten sowie die Verschmutzung der optischen Anordnung werden kompensiert.
- MQW-LEDs sind beispielsweise im Vergleich zu Lasern sehr kostengünstig und einfach anzusteuern.
- MQW-LEDs sind in einem sehr ausgedehnten Spektralbereich vom Ultravioleten (UV) bis in den infraroten Wellenlängenbereich (IR) verfügbar. Somit kann eine entsprechende Anordnung, im Gegensatz beispielsweise zur TDLAS, für eine Vielzahl von Substanze ausgelegt werden.
- Die spektral begrenzte Emissionsbandbreite der MQW-LEDs bedingt nur geringe Anforderungen an den spektralen Blockungsbereich der optischen Filter, welche somit deutlich kostengünstiger produziert werden können.
- Aufgrund der spektral begrenzten Emissionsbandbreite der MQW-LEDs können auch Kantenfilter anstelle von Bandpassfiltern genutzt werden, um zwei abgegrenzte Wellenlängenbereiche (für die Absorptions- und die Referenzmessung) zu erzeugen.
- Als Detektoren können kostengünstige Standard-Photodetektoren verwendet werden.
- Die Vorrichtung ermöglicht eine kontinuierliche Konzentrationsmessung.
- Es sind keine mechanisch bewegten Bauteile erforderlich.
- MQW-LEDs sind beispielsweise im Vergleich zu thermischen Lichtquellen sehr gut elektronisch modulierbar. Hiermit werden eine geringe Störanfälligkeit sowie ein verbessertes SNR ermöglicht.
- Die Kombination mehrerer MQW-LEDs zur gleichzeitigen Detektion verschiedener Substanzen in einem optischen Aufbau ist möglich.
- Mit Hilfe von MQW-LEDs ist ein kleiner mechanisch robuster Aufbau mit geringer elektrischer Leistungsaufnahme realisierbar. Entsprechende Anordnungen können beispielsweise in Batterie-betriebenen Geräten zum Einsatz kommen.

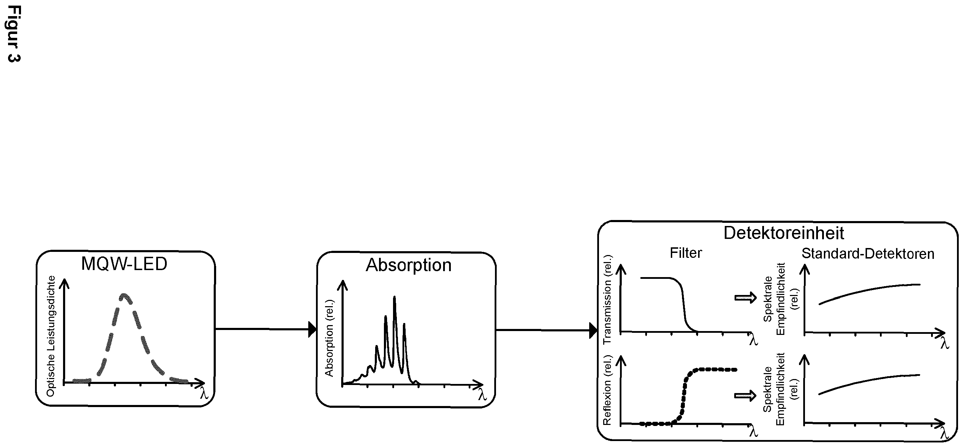

Figur 3 zeigt ein reduziertes Blockschaltbild der erfindungsgemäßen Vorrichtung. Die spektralen Charakteristiken der einzelnen Baugruppen sowie die Absorption des zu detektierenden Mediums sind schematisch aufgezeigt. Das von der MQW-LED emittierte Licht wird dementsprechend direkt durch eine Anordnung zur Absorptionsmessung auf die Detektoreinheit geleitet. Für den Messaufbau können spektral breitbandige, nicht selektive Standard-Photodetektoren verwendet werden.

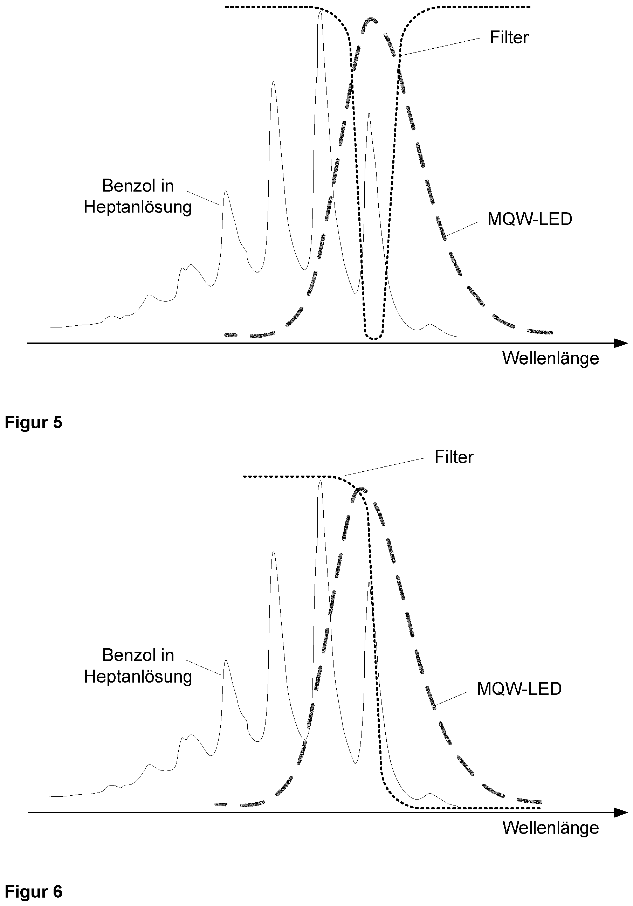

In der Detektoreinheit wird das Licht mittels eines Reflexionsfilters spektral aufgeteilt, wie mittels der Figur 5 und 6 noch näher erläutert werden wird. Mit Hilfe des Reflexionsfilters wird in der Detektoreinheit die spektrale Referenz gebildet. Sowohl das für die Absorptionsmessung als auch das für die Referenzmessung genutzte Licht passieren den gesamten Aufbau bis zur Detektoreinheit auf demselben Pfad. Mögliche dispersive Störeinflüsse in der Anordnung zeigen aufgrund des begrenzten Emissionsspektrums der MQW-LEDs nahezu keine Auswirkungen auf das Messsignal. Nahezu alle Schwankungen bzw. Störungen im MQW-LED-Aufbau wirken sich in gleicher Weise auf den Absorptions- und den Referenzpfad aus und werden kompensiert. Sie beeinflussen somit das Messsignal nicht oder nicht signifikant.

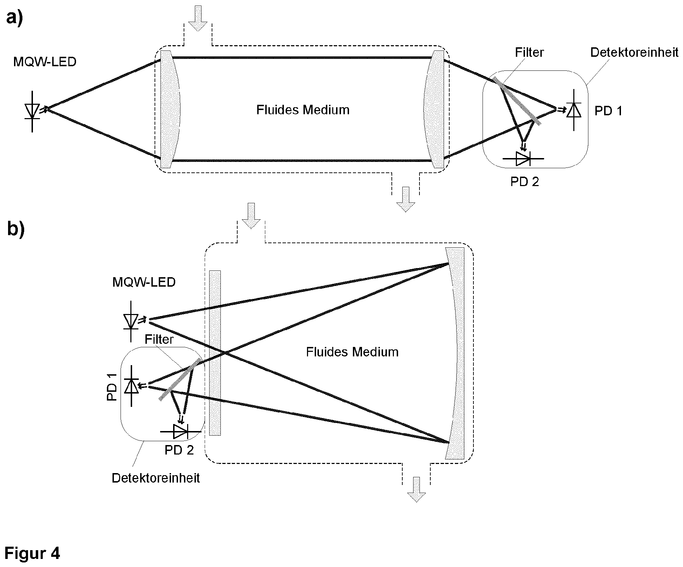

In Figur 4 sind zwei Ausführungsbeispiele der erfindungsgemäßen Vorrichtung dargestellt. Zum Einen ist in Figur 4a eine Transmissionsanordnung mit einer Kollimatorstrecke und zum Anderen ist in Figur 4b eine Holspiegel-Reflexionsanordnung abgebildet. Während die Absorptionslänge in der Anordnung gemäß a) beliebig auf die Anwendung angepasst werden kann, liegen die Vorteile der Anordnung gemäß b) darin begründet, dass hier nur ein Zugang zum Messort erforderlich ist und dass keine dispersionsbedingten Fehler auftreten können.

Die in beiden Anordnungen enthaltene Filter-Detektoranordnung, bestehend aus dem Photodetektor 1 (PD 1), dem Photodetektor 2 (PD 2) und dem Filter, kann beispielsweise als eine wenige Millimeter große, in Mikrosystemtechnik gefertigte Einheit ausgeführt sein. Auf diese Weise kann die Detektoreinheit sehr kompakt und mechanisch robust ausgeführt sein und einfach in die optische Anordnung integriert werden.

Das in der erfindungsgemäßen Vorrichtung genutzte optische Filter ist bevorzugt als Reflexionsfilter ausgeführt, wodurch sowohl das transmittierte als auch das reflektierte Licht nutzbar sind. Das Filter kann als Bandpass- oder als Kantenfilter (Kurzpass oder Langpass) mit hoher Flankensteilheit ausgeführt sein. Entsprechende Filter sind beispielsweise bereits aus der Ramanspektroskopie bekannt.

Wird ein Bandpassfilter verwendet, so können, wie in Figur 5 gezeigt, spektral breitbandige Störeinflüsse und Überlagerungen der Absorptionen anderer Substanzen kompensiert werden. Hingegen stellt die Nutzung eines Kantenfilters, wie in Figur 6 gezeigt, eine etwas kostengünstigere Lösung dar.

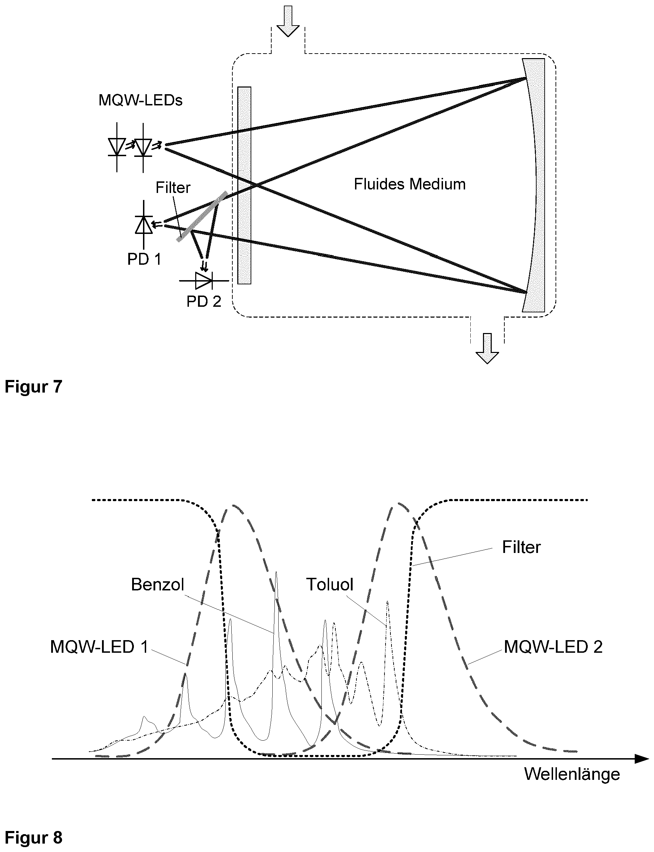

Durch eine räumliche optische Trennung aber auch durch Multiplexverfahren können mehrere MQW-LEDs und Detektoreinheiten in einem Aufbau genutzt werden, um so die Konzentration mehrerer Substanzen in einem Aufbau zu bestimmen und ggf. Querempfindlichkeiten zu kompensieren. Ein Anordnungsbeispiel hierzu ist in Figur 7 dargestellt. In diesem Fall wirken zwei MQW-LEDs im Multiplexverfahren auf nur eine Detektoreinheit mit einem Bandpassfilter (vgl. Figur 8). Somit wird die selektive Detektion selbst mehrerer Substanzen auf sehr einfache und kostengünstige Weise realisiert.

Die erfindungsgemäße Vorrichtung ermöglicht es, die Empfangssignale des Absorptions- und Referenzdetektors entweder noch innerhalb der Vorrichtung oder in einer angeschlossenen Vorrichtung zu verstärken und gegebenenfalls zu digitalisieren. Beispielsweise werden die Signale logarithmisch verstärkt und analog voneinander subtrahiert, um so ein analoges Signal proportional zur Konzentration der zu bestimmenden Substanz bereitzustellen, welches ausgegeben oder digitalisiert und entsprechend verarbeitet werden kann.

Zur Verbesserung der spektralen Emissionsstabilität und zur Erhöhung der optischen Ausgangsleistung sowie der LED-Lebensdauer kann die in der erfindungsgemäßen Vorrichtung verwendete MQW-LED aktiv gekühlt werden.

Falls mit der erfindungsgemäßen Vorrichtung gleichzeitig die Konzentrationen mehrerer Substanzen in dem Fluid bestimmt werden sollen, können mehrere MQW-LEDs genutzt werden, wobei diese beispielsweise elektrisch moduliert sind. Ein weiterer Vorteil der elektrischen Modulation der MQW-LED besteht in der Verbesserung des Signal-Rauschverhältnisses der Messung und der Unterdrückung von Störeinflüssen.

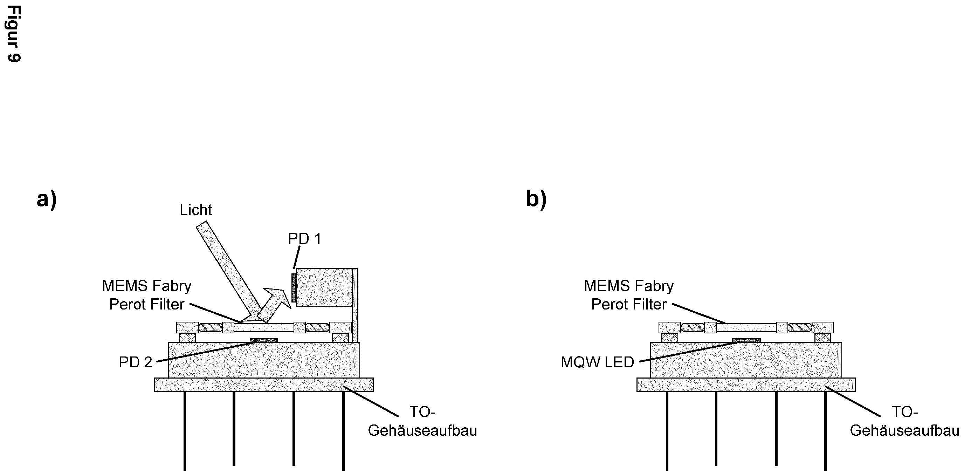

In einer weiteren Ausführungsform ermöglicht die erfindungsgemäße Vorrichtung die Verwendung eines variablen optischen Filters, wobei es sich bei dem variablen Filter vorzugsweise um ein Fabry Perot-Filter in MEMS-Technologie handelt. Das variable Filter kann dabei, wie in Figur 9 schematisch dargestellt, in die Detektoreinheit integriert sein (Figur 9a). Alternativ oder zusätzlich kann das variable Filter vor der MQW-LED angebracht sein (Figur 9b), wobei die MQW-LED beispielsweise im Aufbau des variablen Filters integriert sein kann.

## Patentansprüche

1. Vorrichtung zur Bestimmung der Konzentration einer oder mehrerer Substanzen in einem fluiden Medium, **dadurch gekennzeichnet, dass** die Lichtemission einer MQW-LED zur Absorptionsmessung genutzt wird, wobei das emittierte Licht in einer Messanordnung mit der zu bestimmenden Substanz interagiert, in einer Detektoreinheit mittels eines optischen Filters auf einen Absorptions- und einen Referenzdetektor wirkt, die ein Messsignal und ein Referenzsignal generieren, und aus dem Vergleich dieser Signale die Konzentration der zu bestimmenden Substanz ermittelt wird.

2. Vorrichtung nach Anspruch 1, **dadurch gekennzeichnet, dass** als optisches Filter mindestens ein Kantenfilter, beispielsweise ausgelegt als Kurz- oder Langpassfilter, verwendet wird.

3. Vorrichtung nach Anspruch 1, **dadurch gekennzeichnet, dass** als optisches Filter mindestens ein Bandpassfilter mit einer oder mehrerer Bandpasscharakteristiken verwendet sind.

4. Vorrichtung nach Anspruch 3, **dadurch gekennzeichnet, dass** der Bandpassfilter derart ausgelegt ist, dass mit Hilfe mehrerer MQW-LEDs die Konzentration von mehreren Substanzen bestimmt werden kann.

5. Vorrichtung nach einem der Ansprüche 1 bis 4, **dadurch gekennzeichnet, dass** die MQW-LED aktiv gekühlt ist.

6. Vorrichtung nach einem der Ansprüche 1, 3, 4 oder 5, **dadurch gekennzeichnet, dass** die MQW-LED elektrisch moduliert wird.

7. Vorrichtung nach einem der Ansprüche 1, 3, 4, 5 oder 6, **dadurch gekennzeichnet, dass** mehrere MQW-LEDs auf mindestens eine Detektoreinheit wirken.

8. Vorrichtung nach Anspruch 1, **dadurch gekennzeichnet, dass** das optische Filter variabel ist.

9. Vorrichtung nach Anspruch 8, **dadurch gekennzeichnet, dass** das variable Filter als ein Fabry Perot-Filter in MEMS-Technologie ausgeführt ist.

10. Vorrichtung nach einem der Ansprüche 8 oder 9, **dadurch gekennzeichnet, dass** das variable Filter ausschließlich oder zusätzlich vor der MQW-LED angebracht ist.

11. Vorrichtung nach Anspruch 10, **dadurch gekennzeichnet, dass** die MQW-LED im Aufbau des variablen Filters integriert ist.

12. Verwendung der Vorrichtung nach einem der Ansprüche 1 bis 11 zur Bestimmung der Konzentration einer oder mehrerer Substanzen in einem fluiden Medium.

13. Verwendung nach Anspruch 11, **dadurch gekennzeichnet, dass** Substanz(en) mit breitbandiger Absorptionscharakteristik detektiert werden, wobei die Kante einer Absorptionsbande genutzt wird.

14. Verwendung nach einem der Ansprüche 12 oder 13, **dadurch gekennzeichnet, dass** die Messung kontinuierlich erfolgt.
